(19) Europäisches Patentamt
European Patent Office
Office européen des brevets

(11) **EP 4 179 238 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **21769483.5**

(22) Anmeldetag: **10.09.2021**

(51) Internationale Patentklassifikation (IPC):
*F16J 15/3208* (2016.01)    *F16J 15/3212* (2016.01)
*F16J 15/3236* (2016.01)    *F16J 15/3296* (2016.01)
*F16J 15/34* (2006.01)    *G01D 5/14* (2006.01)

(52) Gemeinsame Patentklassifikation (CPC):
**F16J 15/3296; F16J 15/3208; F16J 15/3212; F16J 15/3236; F16J 15/3452; F16J 15/3492**

(86) Internationale Anmeldenummer:
**PCT/EP2021/074977**

(87) Internationale Veröffentlichungsnummer:
**WO 2022/053636 (17.03.2022 Gazette 2022/11)**

(54) **DICHTUNGSEINRICHTUNG UND DICHTUNGSANORDNUNG MIT SENSORIK ZUR ZUSTANDSÜBERWACHUNG**

SEAL DEVICE AND SEAL ARRANGEMENT WITH SENSOR SYSTEM FOR STATE MONITORING

DISPOSITIF D'ÉTANCHÉITÉ ET AGENCEMENT D'ÉTANCHÉITÉ DOTÉ DE SYSTÈME DE CAPTEUR PERMETTANT LA SURVEILLANCE D'ÉTATS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2020 DE 102020211404**

(43) Veröffentlichungstag der Anmeldung:
**17.05.2023 Patentblatt 2023/20**

(73) Patentinhaber: **Trelleborg Sealing Solutions Germany GmbH**
**70565 Stuttgart (DE)**

(72) Erfinder:
• **SCHÜLE, Christoph**
**71032 Böblingen (DE)**

• **FRANZ, Martin**
**72827 Wannweil (DE)**
• **STRANDBERG, Johan**
**70193 Stuttgart (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
**EP-B1- 0 737 306**     **CN-A- 106 523 710**
**US-A1- 2018 274 682**     **US-B2- 10 648 568**

**Beschreibung**

Die Erfindung betrifft eine Dichtungseinrichtung mit Sensorik zur Zustandsüberwachung gemäß Oberbegriff von Anspruch 1 sowie auch eine Dichtungsanordnung mit einer solchen Dichtungseinrichtung.

Eine solche Dichtungseinrichtung mit Sensorik zur Zustandsüberwachung ist beispielsweise durch CN 106 523 710 A bekannt geworden.

Dynamische Dichtungen haben die Aufgabe, Stoffübergänge zwischen zwei sich relativ zueinander bewegenden Bauteilen, von einem Raum in einen anderen, zu verhindern bzw. auf ein zulässiges Maß zu reduzieren. Sie stellen in vielen Systemen einen wichtigen sicherheits- und funktionsrelevanten Teil dar. Kommt es zum Ausfall, kann es zu Funktionseinschränkungen bzw. sogar zum Funktionsausfall des gesamten Systems bzw. zur Freisetzung schädlicher Substanzen kommen. Um dies zu vermeiden, ist insbesondere bei systemkritischen Anwendungen eine regelmäßige Wartung bzw. Erneuerung der Dichtungen deutlich vor dem erwarteten Ausfallzeitpunkt der Dichtung notwendig. Um die Wartungsintervalle flexibel gestalten zu können und so Ausfallzeiten des Systems zu minimieren, ist eine in situ Zustandsüberwachung von Dichtungen wünschenswert. Hierzu werden zunehmend Sensoren direkt in die Dichtung in der Nähe ihres dynamischen Dichtabschnitts integriert, um einen Rückschluss auf Funktionalität und altersbedingte Abnutzung der Dichtung zu ermöglichen.

Eine Dichtungsreinrichtung mit einer solchen Sensorik zur Zustandsüberwachung der dynamischen Dichtung ist beispielsweise aus der US 10 458 551 B2 sowie der US 10 371 179 B2 bekannt. Durch die Integration der Sensorik in die Dichtungen besteht die Gefahr, dass die eigentliche Funktion und Lebensdauer der Dichtung negativ beeinflusst wird. Darüber hinaus sind die bekannten Dichtungen in der Herstellung komplex und insbesondere bei kleineren Baugrößen nur bedingt realisierbar.

Aus der eingangs genannten CN 106 523 710 A ist eine Lippendichtung bekannt, die einen Dichtlippenteil, einen Körperteil und einen Magneten umfasst, der mit einem von dem Dichtlippenteil und dem Körperteil verbunden ist. Ein anderer des Dichtlippenteils und des Körperteils umfasst einen Magnetfeldsensor, um einen Abstand zwischen dem Magneten und dem Magnetfeldsensor während des Betriebs der Lippendichtung zu bestimmen.

Es ist deshalb die Aufgabe der Erfindung, eine Dichtungseinrichtung und eine Dichtungsanordnung mit einer Sensorik zur Zustandsüberwachung der Dichtung anzugeben, bei der eine negative Beeinflussung der Dichtungsfunktionalität und Lebensdauer der Dichtung vermieden wird und die einfach und kostengünstig herzustellen ist.

Die die Dichtungseinrichtung betreffende Aufgabe wird durch eine Dichtungseinrichtung mit den in Anspruch 1 angegebenen Merkmalen gelöst. Die erfindungsgemäße Dichtungsanordnung weist die in Anspruch 12 angegebenen Merkmale auf. Bevorzugte Weiterbildungen der Erfindung sind Gegenstand der Unteransprüche sowie der Beschreibung. Weitere Vorteile der Erfindung ergeben sich aus der Beschreibung und der Zeichnung.

Die erfindungsgemäße Dichtungseinrichtung mit Sensorik zur Zustandsüberwachung umfasst einen Dichtring mit einem Dichtabschnitt zur dichtenden Anlage an einer Dichtfläche eines Maschinenteils. Der dynamische Dichtabschnitt ist vorzugsweise als ein dynamischer Dichtabschnitt zur dynamisch dichtenden Anlage an der Dichtfläche ausgeführt. Ein Vorspannring dient zum Vorspannen des Dichtabschnitts gegen die Dichtfläche und weist einen ersten Abschnitt und einen zweiten Abschnitt auf, die gemeinsam einen Zwischenraum begrenzen. Einer der beiden Abschnitte ist in einer zur Mittelachse der Dichtungseinrichtung radialen oder axialen Richtung aus einer ersten Position relativ zum jeweilig anderen der beiden Abschnitte federelastisch auslenkbar. Im Falle eines Radialdichtrings in radialer Richtung und im Falle eines Axialdichtrings in axialer Richtung. Die Sensorik umfasst zumindest ein Messelement, das im Zwischenraum des Vorspannrings angeordnet ist und welches mittelbar oder unmittelbar auf eine Auslenkbewegung des einen Abschnitts des Vorspannrings anspricht.

Bei der erfindungsgemäßen Dichtungseinrichtung können mittels der Sensorik an dem Dichtring angreifende Quer- bzw. Seitenkräfte bzw. daraus abgeleitete Bewegungen des Dichtrings bzw. des Vorspannrings im Betriebseinsatz bestimmt werden. Anhand dieser Informationen können im Betriebseinsatz der Dichtungseinrichtung Informationen zu Relativbewegungen zweier durch die Dichtungseinrichtung gegeneinander abgedichteter Maschinenteile, insbesondere deren Beschleunigung, Hub, Bewegungsmuster etc., bestimmt werden. Anhand der vorgenannten Informationen können Rückschlüsse auf die Größe und den zeitlichen Verlauf eines im Betriebseinsatz über das Dichtungselement anliegenden Differenzdruck und auf den funktionellen Zustand des Dichtungsrings sowie auch die verbleibende Lebensdauer desselben gezogen werden. Durch die Anordnung des Messelements der Sensorik im Zwischenraum des Vorspannrings können negative Auswirkungen auf die Funktion und Lebensdauer des Dichtrings vermieden werden. Darüber hinaus ist die Dichtungseinrichtung einfach und kostengünstig zu realisieren.

Nach der Erfindung weist die Sensorik vorzugsweise mehrere, insbesondere genau drei oder genau vier Messelemente auf, die in Umfangsrichtung des Vorspannrings, bevorzugt regelmäßig, voneinander beabstandet angeordnet sind. Es versteht sich, dass die Sensorik, insbesondere bei einem größeren Durchmesser des Vorspannrings, auch mehr als vier Messelemente aufweisen kann. Dadurch können räumlich ortsaufgelöst über den Umfang des Vorspannrings Messdaten ermittelt werden. Dies ermöglicht genauere, validere und aussagekräftigere Rückschlüsse auf die Funktion und verbleibende Lebensdauer des Dichtungsrings.

Das Messelement kann nach der Erfindung im Presssitz an einem der beiden Abschnitte geklemmt gehalten angeordnet sein oder ist in anderer Weise an einem der beiden Abschnitte befestigt, insbesondere mit diesem verklebt oder an diesem festgeschweißt.

Der Wegstrecken-Sensor kann nach der Erfindung ein kontinuierlicher oder ein diskreter Wegstrecken-Sensor sein. Der Wegstrecken-Sensor kann insbesondere eine resistive oder kapazitive Folie umfassen oder durch diese gebildet sein. Der Wegstrecken-Sensor bzw. die Folie ist dabei vorzugsweise an einer Innenwand eines der beiden Abschnitte befestigt, insbesondere festgeklebt oder angeschweißt, welche dem jeweilig anderen Abschnitt zuweist.

Unter konstruktiven wie auch unter fertigungstechnischen Aspekten ist der Vorspannring vorzugsweise einstückig ausgeführt. Die beiden Abschnitte des Vorspannrings können sich bei dieser Bauart insbesondere von einem Rücken- oder Flankenabschnitt des Vorspannrings in einer axialen Richtung wegerstrecken. Ganz besonders bevorzugt weist der der Vorspannring eine U- oder V-förmige Querschnittsform auf. Dadurch kann der Vorspannring einerseits auf einfache Weise mit herkömmlichen Fertigungsverfahren erzeugt werden. Darüber hinaus kann der Vorspannring mit einer definierten Federelastizität seiner beiden Abschnitte oder Schenkel bereitgestellt werden. Dadurch kann das Ansprechverhalten des Vorspannrings auf am Vorspannring angreifende Kräfte zuverlässig auf vorgegebene Werte eingestellt werden. Insgesamt kann dadurch ein großes Einsatzspektrum der Dichtungseinrichtung gewährleistet werden.

Der Vorspannring kann nach der Erfindung aus einem Kunststoff, insbesondere einem paramagnetischen Kunststoff, aus Metall, insbesondere Stahl, oder aus einem Verbundwerkstoff bestehen.

Die vorstehend erläuterten Messelemente können nach der Erfindung mit den jeweils zugeordneten Sensoren an einem - zum Vorspannring separat ausgeführten - Tragelement angeordnet sein. Das Tragelement, die Messelemente und die Sensoren bilden so eine einfach handzuhabende Montageeinheit. Das Tragelement kann beispielsweise in Form eines, insbesondere offenen, Schlauchs ausgeführt sein. Der Schlauch kann extrudiert sein. Die Messelemente/Sensoren sind bei dieser Bauart in den Schlauch eingesetzt. Alternativ kann das Tragelement auch gemeinsam mit den Messelementen im Wege eines 3-D-Druckverfahrens erzeugt sein. Die Sensoren sind bei dieser Bauart in das Tragelement eingesetzt bzw. am Tragelement befestigt. Dadurch kann eine besonders einfache Montage der Messelemente/Sensoren an der Dichtungseinrichtung erreicht werden. Darüber hinaus kann die Montageeinheit im Bereich von vorgegebenen Trennbereichen auf ein für den jeweiligen Vorspannring erforderliches Maß auf einfache Weise abgelängt werden. Dies ist für die Herstellungskosten der Dichtungseinrichtung sowie der Dichtungsanordnung von Vorteil.

Die erfindungsgemäße Dichtungsanordnung umfasst ein erstes Maschinenteil und ein zweites Maschinenteil, die unter Ausbildung eines Dichtspalts voneinander beabstandet angeordnet sind. Die beiden Maschinenteile können längs einer und/oder um eine Bewegungsachse relativ zueinander bewegbar sein. Zum Abdichten des Dichtspalts dient eine vorstehend erläuterte Dichtungseinrichtung, deren Dichtring mit seinem Dichtabschnitt an einem der beiden Maschinenteile dichtend anliegt. Bei der erfindungsgemäßen Dichtungsanordnung kann anhand der mittels der Sensorik ermittelbaren Daten Wartungsintervalle der Dichtungseinrichtung bzw. des Dichtrings bedarfsgerecht definiert werden, was einerseits für die Betriebssicherheit und andererseits für die mit der Wartung verbundenen Kosten vorteilhaft ist.

Nachfolgend ist die Erfindung anhand von in der Zeichnung wiedergegebenen Ausführungsbeispielen erläutert. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:

Fig. 1 eine Dichtungsanordnung mit zwei Maschinenteilen, die durch eine Dichtungseinrichtung mit einem Vorspannring und mit einem dynamischen Dichtring gegeneinander abgedichtet sind, wobei der Vorspannring mit einer Sensorik zur Zustandsüberwachung des Dichtrings versehen ist;

Fig. 2 die Dichtungseinrichtung gemäß Fig. 1 in einer freigestellten Seitenansicht;

Fig. 3 eine erste Ausführungsform einer Dichtungseinrichtung gemäß Fig. 1 mit einem zwischen zwei Abschnitten des Vorspannrings angeordneten Messelement, das auf eine radialkraftbedingte Verformung des Vorspannrings anspricht und welches mit einem Wegstrecken-Sensor zusammenwirkt;

Fig. 4 ein schematisiertes Funktionsschaubild des Messeelements gemäß Fig. 3;

Fig. 5 eine weitere Ausführungsform einer Dichtungseinrichtung gemäß Fig. 1 mit einem zwischen den zwei Abschnitten des Vorspannrings angeordneten Messelement, das auf eine Verformung des Vorspannrings anspricht und diese in eine durch einen Sensor detektierbare Axialbewegung umsetzt;

Fig. 6 eine weitere, nicht erfindungsgemäße Ausführungsform einer Dichtungseinrichtung gemäß Fig. 1, bei dem der Vorspannring einen Permanentmagneten umfasst, dessen Feldänderung durch ein zwischen zwei Abschnitten des Vorspannrings angeordneten Messelement in Form eines Hall-Sensors detektierbar sind;

Fig. 7 eine weitere Ausführungsform einer Dichtungseinrichtung gemäß Fig. 1, bei dem zwischen zwei Abschnitten des Vorspannrings ein elastomeres Messelement angeordnet ist, das mit einem druckempfindlichen Sensor zusammenwirkt;

Fig. 8 eine nicht erfindungsgemäße Dichtungseinrichtung, bei der das im Zwischenraum des Vorspannrings angeordnete Messelement in Form eines Piezoelements ausgeführt; und

Fig. 9    ein Tragelement mit der daran befestigten Sensorik für eine nicht erfindungsgemäße Dichtungseinrichtung gemäß den Fign. 1-3, in einer Seitenansicht.

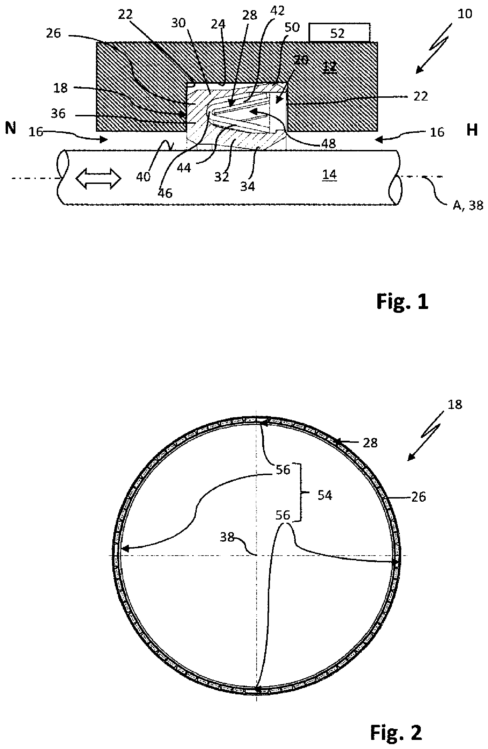

**Fig. 1** zeigt eine Dichtungsanordnung **10** mit einem ersten und mit einem zweiten Maschinenteil **12, 14,** die unter Ausbildung eines Dichtspalts **16** voneinander beabstandet angeordnet sind. Die beiden Maschinenteile 12, 14 sind hier entlang einer mit **A** bezeichneten Bewegungsachse relativ zueinander bewegbar. Die Dichtungsanordnung 10 kann beispielsweise als ein Hydraulikzylinder ausgeführt sein, sodass das erste Maschinenteil 12 in diesem Fall ein Zylinderrohr und das zweite Maschinenteil 14 eine Kolbenstange ist.

Zur Abdichtung einer Hochdruckseite **H** des Dichtspalts 16 gegenüber einer Außen- oder Niederdruckseite **N** dient eine Dichtungseinrichtung **18**. Die Dichtungseinrichtung 18 ist in einer Haltenut **20** eines der beiden Maschinenteile 12, 14 gehalten angeordnet. Die Haltenut 20 weist zwei einander zuweisende Nutflanken **22** und einen Nutboden **24** auf.

Die Dichtungseinrichtung 18 umfasst einen Dichtring **26** und einen Vorspannring **28**. Der Dichtring 26 weist einen Fuß- oder Halteabschnitt **30** und eine Dichtlippe **32** mit einem hier dynamischen Dichtabschnitt **34** auf. Der Halteabschnitt 30 und die Dichtlippe 32 sind über einen Verbindungsabschnitt **36** miteinander verbunden. Insgesamt weist der Dichtring 26 eine V-förmige Querschnittsform auf.

Der Vorspannring 28 dient dazu, den Dichtabschnitt 36 des Dichtrings 26 in einer zur Mittelachse **38** der Dichtungseinrichtung 18 radialen Richtung gegen eine Dichtfläche **40** des zweiten Maschinenteils 14 dynamisch dichtend vorzuspannen. Die Mittelachse 38 der Dichtungseinrichtung fällt in deren Montagezustand mit der Bewegungsachse A der beiden Maschinenteile 12, 14 zusammen. Der Vorspannring 28 weist eine im Wesentlichen V-förmige Querschnittsform mit einem ersten Abschnitt **42** und mit einem zweiten Abschnitt **44** auf, die über einen Rückenabschnitt **46** miteinander verbunden sind. Die beiden Abschnitte 42, 44 sind in einer radialen Richtung relativ zueinander federelastisch aus ihrer gezeigten Ruheposition bewegbar. Zwischen den beiden Abschnitten 42, 44 ist ein Zwischenraum **48** ausgebildet. Der Dichtring 26 weist einen statischen Dichtabschnitt **50** auf. Der statische Dichtabschnitt 50 liegt hier am Nutboden 24 der Haltenut 20 in einer radialen Richtung statisch dichtend an.

Der Dichtring 26 kann aus einem gummi- oder zähelastisch verformbaren Material bestehen. Der Dichtring 26 weist ein kleineres Modul auf, als der Vorspannring 28. Das Material des Dichtrings 26 kann an dem Vorspannring 28 angespritzt sein. Die Dichtungseinrichtung 18 ist als eine vorkonfektionierte Baueinheit ausgeführt. Eine Auswerteeinheit, deren Funktion nachstehend detaillierter erläutert ist, ist mit **52** bezeichnet. Die Auswerteeinheit 52 kann an einem der beiden Maschinenteile 12, 14 oder von diesen beabstandet angeordnet sein. Es versteht sich, dass die beiden Maschinenteile 12, 14 der Dichtungsanordnung alternativ oder zusätzlich um die Bewegungsachse A relativ zueinander rotatorisch verstellbar sein können. Darüber hinaus können die beiden Maschinenteile 12, 14 auch zueinander ruhend angeordnet sein. In diesem Fall ist der Dichtabschnitt des Dichtrings 26 statisch dichtend ausgeführt. Auch kann der Dichtring 26 als ein Abstreif-Dichtring ausgeführt sein. In diesem Fall ist die Hochdruckseite H und die Niederdruckseite N des Dichtspalts 16 gemäß Fig. 1 getauscht angeordnet.

**Fig. 2** zeigt die Dichtungseinrichtung 18 in einer freigestellten Seitenansicht. Die Dichtungseinrichtung 18 umfasst eine insgesamt mit **54** bezeichnete Sensorik, die der Zustandsüberwachung des Dichtrings 26 dient. Die Sensorik 54 umfasst hier mehrere, vorzugsweise drei oder vier, Messelemente **56,** die jeweils im Zwischenraum 48 des Vorspannrings 28 angeordnet sind und die in Umfangsrichtung der Dichtungseinrichtung 18, bevorzugt regelmäßig, voneinander beabstandet angeordnet sind. Die Sensorik 54 ist mit einer Auswerteeinheit 52 (Fig. 1) gekoppelt.

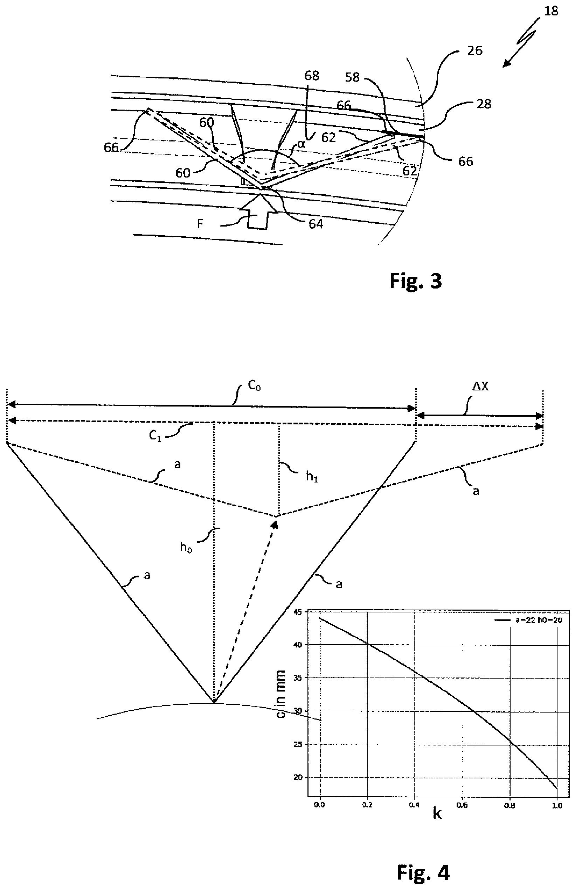

Die Sensorik 54 der Dichtungseinrichtung 18 kann unterschiedlich ausgebildet sein. Gemäß dem in **Fig. 3** gezeigten Ausführungsbeispiel der Dichtungseinrichtung 18 sind die Messelemente 56 jeweils derart im Zwischenraum 48 des Vorspannrings 28 angeordnet, dass das Messelement 56 durch eine Relativbewegung der beiden Maschinenteile 12, 14 bzw. eine Auslenkung des zweiten Abschnitts 44 in radialer Richtung relativ zum ersten Abschnitt 42 zumindest abschnittsweise eine in Umfangsrichtung des Vorspannrings 28 gerichtete Relativbewegung ausführt, die durch einen Sensor **58** detektierbar ist.

Das Messelement 56 ist hier in Form einer abgewinkelten Blattfeder mit einem ersten und mit einem zweiten Schenkel **60, 62** ausgeführt. Die beiden Schenkel 60, 62 sind im Eckbereich **64** des Messelements 56 miteinander verbunden und vorzugsweise gleich lang ausgeführt. Die beiden Schenkel 60, 62 schließen im Ruhezustand der Dichtungsanordnung 10 (Fig. 1) gemeinsam einen Winkel α zwischen 50° und 150°, bevorzugt zwischen 70° und 140°, ein.

Die beiden freien Enden **66** des Messelements 56 sind einem der beiden Abschnitte 42, 44 des Vorspannrings 28 zugeordnet bzw. weisen diesem zu, während der Eckbereich 64 dem jeweilig anderen Abschnitt 42, 44 zuweist bzw. zugeordnet ist. Einer der Schenkel 60, 62 kann einenends an einem der beiden Abschnitte 42, 44 des Vorspannrings 28, hier beispielhaft am ersten Abschnitt, unverschieblich befestigt sein. Das Messelement 56 besteht vorzugsweise insgesamt aus Metall. Dem Messelement 56 ist ein zum Messelement 56 separat ausgebildeter Sensor 58 zugeordnet. Der Sensor 58 ist hier ein Wegstrecken-Sensor 58, durch den Bewegungen des freien Endes des zweiten Schenkels 62 des Messelements 56 - relativ zum Sensor 58 ortsaufgelöst (diskret oder kontinuierlich) detektierbar sind. Der Sensor 58 kann beispielsweise eine druckempfindliche Folie umfassen oder durch diese gebildet sein.

Der Sensor 58 kann insbesondere an der Innenseite **68** des ersten Abschnitts 42 befestigt sein, die dem zweiten Abschnitt 44 zuweist. So kann der Sensor 58 beispielsweise an der Innenseite 68 festgeklebt oder mit dem ersten Abschnitt verschweißt sein. Andere Befestigungsarten sind ohne Weiteres vorstellbar. Durch die geschützte Anordnung des Sensors 58 ist dieser gegen mechanische Beschädigungen, wie diese etwa beim Einbau der Dichtungseinrichtung 18 auftreten können, gut geschützt.

Wirkt auf den zweiten Abschnitt des Vorspannrings 28 eine Radialkraft **F,** durch die der zweite Abschnitt in radialer Richtung aus seiner Ruheposition federelastisch ausgelenkt wird, so führt dies bei dem in **Fig. 3** gezeigten Ausführungsbeispiel zu einer mit dieser Auslenkung korrelierenden Kompression des Messelements 56. In der Folge wird das freie Ende 66 des zweiten Schenkels 62 des Messelements 56 unter Abstützung am Sensor 58 in Aktivierungsrichtung verschoben, wie dies in Fig. 3 mit strichlierter Darstellung des Messelements 56 gezeigt ist.

Gemäß dem in **Fig. 4** wiedergegebenen schematischen Funktionsschaubild korreliert die jeweilig zurückgelegte Wegstrecke $\Delta$x des freien Endes des Messelements 56 als Differenz der vom Messelement 56 überdeckten Basislänge $C_1$ bei Kompression des Messelements 56 und der Basislänge $C_0$ im Ruhezustand mit der Auslenkung des zweiten Abschnitts 44 des Vorspannrings 28, d. h. mit der durch die Kompression des Messelements 56 einhergehenden Verkleinerung dessen Höhe $h_0$ im Ruhezustand.

Vorliegend gilt:

$$c = \sqrt{4a^2 - 4h^2} \; mit \; h1 = k * h_0 \; mit \; 0 \le k \le 1$$

$$c(k) = \sqrt{4a^2 - 4kh_0{}^2}$$

wobei a die jeweilige Länge der beiden Schenkel 60, 62 des Messelements 56, $h_0$ die Höhe des Messelements 56 im Ruhezustand und $h_1$ die Höhe des Messelements im aktivierten Zustand sind.

Ein jeweiliges Ausgangssignal des dem Messelement zugeordneten Sensors 58 kann dadurch einer definierten Auslenkung des zweiten Abschnitts 44 des Vorspannrings eindeutig zugeordnet werden. Auf Basis der Messsignale des Sensors 58 kann so eine Zustandsüberwachung der Dichtungseinrichtung 18, spezifischer des Dichtrings 26, sowie auch von Betriebszuständen der Dichtungsanordnung 10 erfolgen. Dies erfolgt vorzugsweise mittels der Auswerteeinheit 52 (Fig. 1).

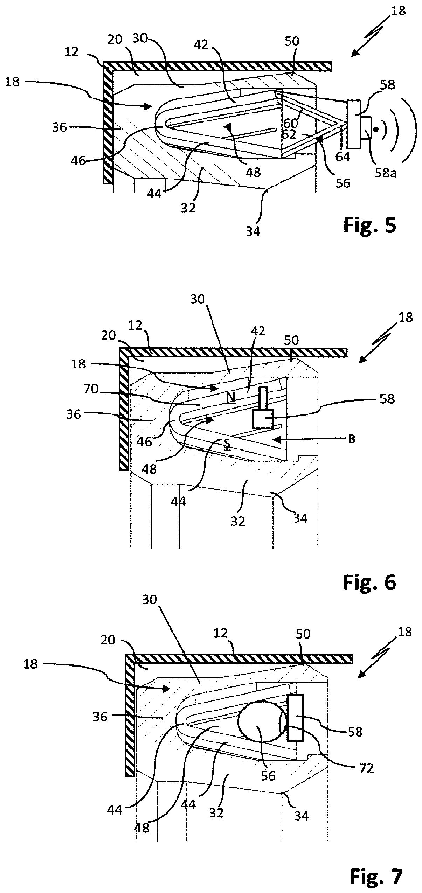

Das als abgewinkeltes Blattfederelement ausgebildete Messelement 56 kann gemäß einer weiteren Ausführungsform derart zwischen den beiden Abschnitten 42, 44 des Vorspannrings 28 angeordnet sein, dass eine durch eine Radialkraft F bewirkte Kompression des Messelements 56 eine in axialer Richtung gerichtete Kraft bzw. Verschiebung des eines freien Endes 66 des Messelements 56 zur Folge hat, die durch den Sensor 58 detektierbar und quantifizierbar ist. In diesem Fall können die beiden freien Enden des Messelements 56 zwischen den beiden Abschnitten des Vorspannrings 28 alleinig geklemmt erhalten angeordnet sein oder aber zumindest ein Schenkel 60, 62 des Messelements 56 ist an einem der beiden Abschnitte des Vorspannrings 28 befestigt. Gemäß dem in **Fig. 5** gezeigten Ausführungsbeispiel kann alternativ auch der Eckbereich 64 des mechanisch verformbaren Messelements 56 dem Sensor 58 zugeordnet sein. Der Sensor 58 kann in diesem Fall ein berührungsfrei arbeitender Abstandssensor, beispielsweise ein Ultraschall- oder ein optischer Sensor 58, oder aber gemäß Fig. 5 ein druckempfindlicher Sensor sein, der von dem Messelement 56 allzeit kontaktiert wird. Jeder der in der Zeichnung gezeigten Sensoren 58 kann einen Sender 58a zur drahtfreien Übertragung von Messsignalen an die Auswerteeinheit (Fig. 1) aufweisen.

Gemäß dem in **Fig. 6** gezeigten Ausführungsbeispiel, das nicht Teil der Erfindung ist, kann die Zustandsüberwachung des Dichtrings 26 auch mittels eines Messelements 56 in Form eines Hall-Sensors 58 erfolgen. Hier können die beiden Abschnitte 42, 44 des Vorspannrings 28 gemeinsam einen Permanentmagneten 70 bilden. Einer der beiden Abschnitte 42, 44 des Vorspannrings 28 bildet den Nordpol **N** und der jeweilig andere Abschnitt 42, 44 bildet den dazu korrespondierenden Südpol **S** des Permanentmagneten 70, derart, dass zwischen den beiden Abschnitten 40, 42 ein Magnetfeld B ausgebildet ist. Das Messelement 56 ist in diesem Fall als Hall-Sensor ausgebildet, durch den Änderungen dieses Magnetfeldes detektierbar sind. Das Messelement 56 ist im Zwischenraums 48 angeordnet und kann beispielsweise am ersten Abschnitt 42 des Vorspannrings 28 befestigt sein.

Gemäß einem in der Zeichnung nicht näher gezeigten Ausführungsbeispiel können die beiden Abschnitte 42, 44 des Vorspannrings 28 auch jeweils zueinander komplementär angeordnete Permanentmagneten 70 aufweisen, durch die das Magnetfeld im Zwischenraum 48 der beiden Abschnitte des Vorspannrings 28 erzeugt ist. Die Permanentmagnete 70 können an den Abschnitten 42, 44 beispielsweise festgeklebt, angeschweißt oder in anderer geeigneter Weise befestigt sein.

Das Messelement 56 kann gemäß dem in **Fig. 7** dargestellten Ausführungsbeispiel ein, bevorzugt volumenkonstant, komprimierbares elastomeres Material umfassen, das sich vom ersten zum zweiten Abschnitt 42, 44 des Vorspannrings 28 erstreckt. Das Messelement 56 kann an einem oder an beiden Abschnitten des Vorspannrings 28 befestigt, insbesondere festgeklebt sein. Auch diesem Messelement 56 ist ein, vorzugsweise berührungsfrei, arbeitender Sensor 58 zugeordnet. Dieser kann analog zu dem in Fig. 5 gezeigten Ausführungsbeispiel ein Abstandssensor oder auch ein druckempfindlicher Sensor sein. Das Messelement 56 kann für den Sensor 59 eine Messmarke **72** aufweisen, die aus einem anderen Material als das übrige Messelement 56 besteht. Dadurch kann die Justierung des betreffenden Sensors 58 ggf. vereinfacht und Fehlmessungen im Betriebseinsatz entgegengewirkt werden. Dies gilt insbesondere für einen berührungsfrei arbeitenden Sensor 58.

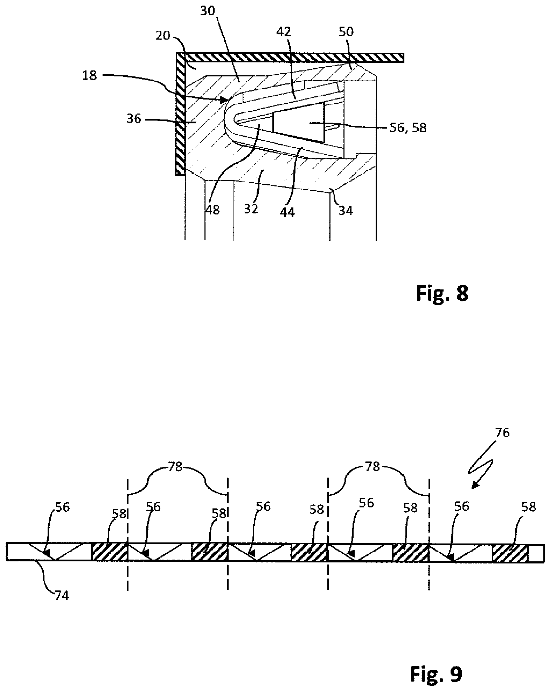

Gemäß dem in **Fig. 8** wiedergegebenen Ausführungsbeispiel, das nicht Teil der Erfindung ist, kann das Messelement 56 im Zwischenraum 48 der beiden Abschnitte des Vorspannrings 28 auch durch ein Piezoelement gebildet sein. Das Piezoelement ist drucksensitiv und erzeugt Messsignale in Abhängigkeit von einer durch die radialkraftbedingte Auslenkung des zweiten Abschnitts 44 des Vorspannrings auf das Piezoelement einwirkenden Kraftkomponente.

Gemäß Fig. 9, einem nicht erfindungsgemäßen Ausführungsbeispiel, können die vorstehend erläuterten Messelemente 56 und die mit den Messelementen 56 jeweils zusammenwirkenden Sensoren 58 gemeinsam an einem - zum Vorspannring 28 separat ausgeführten - Tragelement **74** angeordnet sein. Das Tragelement 74, die Messelemente 56 und die Sensoren 58 bilden so eine einfach handzuhabende Montageeinheit **76.** Das Tragelement 74 kann beispielsweise in Form eines, insbesondere offenen, Schlauchs ausgeführt sein. Der Schlauch kann extrudiert sein. Die Messelemente 56 sind bei dieser Bauart in den Schlauch eingesetzt. Alternativ kann das Tragelement 74 auch gemeinsam mit den Messelementen 56 im Wege eines 3-D-Druckverfahrens erzeugt sein. Die Sensoren 58 sind in beiden Fällen in das Tragelement 74 eingesetzt bzw. am Tragelement 74 befestigt. Dadurch kann eine besonders einfache Montage der Dichtungseinrichtung erreicht werden. Darüber hinaus kann die Montageeinheit 76 auf einfache Weise im Bereich von vorgegebenen Trennbereichen auf ein für den jeweiligen Vorspannring erforderliches Maß abgelängt werden.

Die Messsignale der vorstehend erläuterten Messelemente 56 bzw. Sensoren 58 können der Auswerteeinheit 52 drahtgebunden oder drahtlos übermittelbar sein. Aus diesen Messsignalen können Informationen zum Funktionenzustand des Dichtrings 26, der Dichtungseinrichtung 18 bzw. der gesamten Dichtungsanordnung 10 abgeleitet werden. Die Sensoren 54 können zudem mit einer eigenständigen Energieversorgung bzw. mit einer Energy-Harvesting-Einheit versehen sein, die in der Zeichnung nicht näher gezeigt ist.

**Patentansprüche**

1.  Dichtungseinrichtung (18) mit einer Sensorik (54) zur Zustandsüberwachung umfassend:

    - einen Dichtring (26) mit einem, bevorzugt dynamischen, ersten Dichtabschnitt (34) zur dichtenden Anlage an einer Dichtfläche (40) eines Maschinenteils (12, 14);
    - einen Vorspannring (28) zum Vorspannen des Dichtabschnitts gegen die Dichtfläche (40), aufweisend einen ersten Abschnitt (42) und einen zweiten Abschnitt (44), die gemeinsam einen Zwischenraum (48) begrenzen, wobei einer der beiden Abschnitte (42, 44) in einer zur Mittelachse (38) der Dichtungseinrichtung (18) radialen oder axialen Richtung aus einer ersten Position relativ zum jeweilig anderen der beiden Abschnitte (42, 44) federelastisch auslenkbar ist;
    wobei die Sensorik (54) zumindest ein Messelement (56) umfasst, das im Zwischenraum (48) des Vorspannrings (28) angeordnet ist und das mittelbar oder unmittelbar auf eine Auslenkbewegung des einen Abschnitts (44) des Vorspannrings (28) anspricht, und wobei das Messelement (56) derart im Zwischenraum (48) angeordnet ist, dass durch eine Auslenkung des einen der beiden Abschnitte (42, 44) in radialer/axialer Richtung relativ zum jeweilig anderen der beiden Abschnitte (42, 44) zumindest abschnittsweise eine Axialbewegung oder eine in Umfangsrichtung des Vorspannrings (28) gerichtete Verformung des Messelements (56) bewirkt ist, die durch einen Sensor (58) detektierbar ist,
    **dadurch gekennzeichnet, dass**
    das Messelement (56) ein Federelement ist, das sich vom ersten zum zweiten Abschnitt (42, 44) erstreckt und das mit dem Sensor (58) zusammenwirkt.

2.  Dichtungseinrichtung (18) gemäß Anspruch 1, **dadurch gekennzeichnet, dass** der Sensor (58) ein kontinuierlicher oder diskreter Wegstreckensensor ist.

3.  Dichtungseinrichtung (18) gemäß Anspruch 2, **dadurch gekennzeichnet, dass** der Sensor (58) ein resistiver oder ein kapazitiver Sensor ist.

4.  Dichtungseinrichtung gemäß Anspruch 2 oder 3, **dadurch gekennzeichnet, dass** der Sensor (58) an einer Innenseite (68) eines der beiden Abschnitte (42, 44) befestigt, insbesondere festgeklebt oder angeschweißt, ist.

5. Dichtungseinrichtung (18) gemäß einem der vorhergehenden Ansprüche, **dadurch gekennzeichnet, dass** die Sensorik (54) mehrere, insbesondere genau drei oder vier, Messelemente (56) und/oder Sensoren (58) umfasst, die in Umfangsrichtung des Vorspannrings (28), bevorzugt regelmäßig, voneinander beabstandet angeordnet sind.

6. Dichtungseinrichtung (18) gemäß Anspruch 5, **dadurch gekennzeichnet, dass** die Messelemente (56) und Sensoren (58) gemeinsam an einem Tragelement (74) angeordnet sind, das zwischen den beiden Abschnitten (40, 42) des Vorspannrings (28) gehalten angeordnet ist.

7. Dichtungseinrichtung (18) gemäß Anspruch 6, **dadurch gekennzeichnet, dass** das Tragelement (74) in Form eines Schlauchs ausgeführt ist oder dass das Tragelement (74) gemeinsam mit den Messelementen (56) als ein 3D-Druckteil ausgeführt sind.

8. Dichtungseinrichtung (18) gemäß einem der vorhergehenden Ansprüche, **dadurch gekennzeichnet, dass** der Vorspannring (28) einstückig ausgeführt ist.

9. Dichtungseinrichtung (18) gemäß einem der vorhergehenden Ansprüche, **dadurch gekennzeichnet, dass** sich die beiden Abschnitte (42, 44) des Vorspannrings (28) von einem Rückenabschnitt (46) des Vorspannrings (28) wegerstrecken.

10. Dichtungseinrichtung (18) gemäß einem der vorhergehenden Ansprüche, **dadurch gekennzeichnet, dass** der Vorspannring (28) einen V- oder U-förmigen Querschnitt aufweist.

11. Dichtungseinrichtung (18) gemäß einem der vorhergehenden Ansprüche, **dadurch gekennzeichnet, dass** der Vorspannring (28) aus einem Kunststoff, Metall, insbesondere Stahl, oder aus einem Verbundwerkstoff besteht.

12. Dichtungsanordnung (10), umfassend:

    - ein erstes Maschinenteil (42) und ein zweites Maschinenteil (44), die unter Ausbildung eines Dichtspalts (16) voneinander beabstandet angeordnet und längs einer oder um eine Bewegungsachse relativ zueinander bewegbar sind; und
    - eine Dichtungseinrichtung (18) gemäß einem der vorhergehenden Ansprüche, deren Dichtring (26) mit seinem Dichtabschnitt (34) an einem der beiden Maschinenteile (12, 14) dichtend anliegt.

**Claims**

1. A sealing device (18) with a sensor system (54) for condition monitoring, comprising:

    - a sealing ring (26) with a, preferably dynamic, first sealing section (34) for sealing contact at a sealing surface (40) of a machine part (12, 14);
    - a pretensioning ring (28) for pretensioning the sealing section against the sealing surface (40), having a first section (42) and a second section (44), which together delimit an intermediate space (48), wherein one of the two sections (42, 44) can be deflected in a spring-elastic manner from a first position relative to the respective other of the two sections (42, 44) in a direction radial or axial to the center axis (38) of the sealing device (18); wherein the sensor system (54) comprises at least one measuring element (56) which is arranged in the intermediate space (48) of the pretensioning ring (28) and which responds indirectly or directly to a deflection movement of one section (44) of the pretensioning ring (28), and wherein the measuring element (56) is arranged in the intermediate space (48) in such a way that at least sectionally an axial movement or a deformation, directed in the circumferential direction of the pretensioning ring (28), of the measuring element (56) which can be detected by a sensor (58) is caused by a deflection of one of the two sections (42, 44) in the radial/axial direction relative to the respective other of the two sections (42, 44), **characterized in that** the measuring element (56) is a spring element which extends from the first to the second section (42, 44) and which interacts with the sensor (58).

2. The sealing device (18) according to claim 1, **characterized in that** the sensor (58) is a continuous or discrete distance sensor.

3. The sealing device (18) according to claim 2, **characterized in that** the sensor (58) is a resistive or a capacitive sensor.

**4.** The sealing device according to claim 2 or 3, **characterized in that** the sensor (58) is fastened, in particular glued or welded, to an inner side (68) of one of the two sections (42, 44).

**5.** The sealing device (18) according to any one of the preceding claims, **characterized in that** the sensor system (54) comprises a plurality of, in particular exactly three or four, measuring elements (56) and/or sensors (58), which are arranged spaced apart from one another, preferably regularly, in the circumferential direction of the pretensioning ring (28).

**6.** The sealing device (18) according to claim 5, **characterized in that** the measuring elements (56) and sensors (58) are arranged together on a support element (74), which is arranged held between the two sections (40, 42) of the pretensioning ring (28).

**7.** The sealing device (18) according to claim 6, **characterized in that** the support element (74) is designed in the form of a sleeve or **in that** the support element (74) together with the measuring elements (56) are designed as a 3D printed part.

**8.** The sealing device (18) according to any one of the preceding claims, **characterized in that** the pretensioning ring (28) is designed in one piece.

**9.** The sealing device (18) according to any one of the preceding claims, **characterized in that** the two sections (42, 44) of the pretensioning ring (28) extend away from a back section (46) of the pretensioning ring (28).

**10.** The sealing device (18) according to any one of the preceding claims, **characterized in that** the pretensioning ring (28) has a V-shaped or U-shaped cross-section.

**11.** The sealing device (18) according to any one of the preceding claims, **characterized in that** the pretensioning ring (28) consists of a plastic, metal, in particular steel, or of a composite material.

**12.** A sealing arrangement (10), comprising:

- a first machine part (12) and a second machine part (14), which are arranged at a distance from one another to form a sealing gap (16) and are movable relative to one another along or about a movement axis; and
- a sealing device (18) according to any one of the preceding claims, the sealing ring (26) of which with its sealing section (34) in a sealing manner abuts one of the two machine parts (12, 14).

**Revendications**

**1.** Dispositif d'étanchement (18) équipé d'une système de détection (54) affecté à la surveillance d'états, comprenant :

- une bague d'étanchement (26) munie d'une première zone d'étanchement (34) préférentiellement dynamique, conçue pour venir en applique, de manière étanche, contre une surface d'étanchement (40) d'une partie de machine (12, 14) ;
- une bague de précontrainte (28) conçue pour contraindre préalablement ladite zone d'étanchement contre ladite surface d'étanchement (40), et comportant une première région (42) et une seconde région (44) qui délimitent conjointement un espace intercalaire (48), sachant que l'une des deux régions (42, 44) peut accomplir avec l'élasticité d'un ressort, à partir d'un premier emplacement, une excursion pivotante vis-à-vis de l'autre considérée parmi les deux régions (42, 44), dans une direction radiale ou axiale par rapport à l'axe médian (38) dudit dispositif d'étanchement (18) ;
ledit système de détection (54) incluant au moins un élément de mesure (56) qui est logé dans l'espace intercalaire (48) de la bague de précontrainte (28) et réagit, directement ou indirectement, à un mouvement d'excursion pivotante de l'une (44) des régions de ladite bague de précontrainte (28), lequel élément de mesure (56) occupe, dans ledit espace intercalaire (48), une position telle qu'une excursion pivotante de l'une des deux régions (42, 44), s'opérant dans une direction radiale/axiale vis-à-vis de l'autre considérée parmi lesdites deux régions (42, 44) gouverne, au moins par zones, un mouvement axial ou une déformation dudit élément de mesure (56) orientée dans la direction du pourtour de ladite bague de précontrainte (28), pouvant être détecté(e) par l'intermédiaire d'un capteur (58), **caractérisé par le fait que** l'élément de mesure (56) est un élément élastique s'étendant de la première à la seconde région (42, 44) et coopérant avec le capteur (58).

2. Dispositif d'étanchement (18) selon la revendication 1, **caractérisé par le fait que** le capteur (58) est un détecteur de courses, du type continu ou discret.

3. Dispositif d'étanchement (18) selon la revendication 2, **caractérisé par le fait que** le capteur (58) est un capteur résistif ou capacitif.

4. Dispositif d'étanchement (18) selon la revendication 2 ou 3, **caractérisé par le fait que** le capteur (58) est fixé à une face intérieure (68) de l'une des deux régions (42, 44), notamment collé rigidement ou rapporté par soudage.

5. Dispositif d'étanchement (18) selon l'une des revendications précédentes, **caractérisé par le fait que** le système de détection (54) compte plusieurs éléments de mesure (56) et/ou capteurs (58), au nombre exact de trois ou quatre en particulier, implantés à distance les uns des autres, de préférence régulièrement, dans la direction du pourtour de la bague de précontrainte (28).

6. Dispositif d'étanchement (18) selon la revendication 5, **caractérisé par le fait que** les éléments de mesure (56) et les capteurs (58) sont disposés, conjointement, sur un élément de support (74) maintenu interposé entre les deux régions (42, 44) de la bague de précontrainte (28).

7. Dispositif d'étanchement (18) selon la revendication 6, **caractérisé par le fait que** l'élément de support (74) est réalisé sous la forme d'un tuyau souple ; ou **par le fait que** ledit élément de support (74) est conçu en tant que pièce imprimée en 3D, conjointement aux éléments de mesure (56).

8. Dispositif d'étanchement (18) selon l'une des revendications précédentes, **caractérisé par le fait que** la bague de précontrainte (28) est de réalisation monobloc.

9. Dispositif d'étanchement (18) selon l'une des revendications précédentes, **caractérisé par le fait que** les deux régions (42, 44) de la bague de précontrainte (28) partent d'une région postérieure (46) de ladite bague de précontrainte (28).

10. Dispositif d'étanchement (18) selon l'une des revendications précédentes, **caractérisé par le fait que** la bague de précontrainte (28) présente une section transversale configurée en V ou en U.

11. Dispositif d'étanchement (18) selon l'une des revendications précédentes, **caractérisé par le fait que** la bague de précontrainte (28) consiste en une matière plastique, en un métal, de l'acier en particulier, ou en un matériau composite.

12. Ensemble d'étanchement (10) comprenant :

- une première partie de machine (12) et une seconde partie de machine (14) qui sont placées à distance l'une de l'autre en donnant naissance à un interstice d'étanchement (16), et peuvent être animées de mouvements relatifs le long d'un axe de mouvement, ou autour de ce dernier ; et
- un dispositif d'étanchement (18) conforme à l'une des revendications précédentes, dont la bague d'étanchement (26) est en applique de manière étanche, par sa zone d'étanchement (34), contre l'une des deux parties de machine (12, 14).

**Fig. 1**

**Fig. 2**

**Fig. 3**

**Fig. 4**

**Fig. 5**

**Fig. 6**

**Fig. 7**

**Fig. 8**

**Fig. 9**

**IN DER BESCHREIBUNG AUFGEFÜHRTE DOKUMENTE**

**In der Beschreibung aufgeführte Patentdokumente**

- CN 106523710 A
- US 10458551 B2
- US 10371179 B2